# EUROPÄISCHE PATENTANMELDUNG

(11) **EP 3 725 862 A1**
(43) Veröffentlichungstag der Anmeldung: **21.10.2020**
(21) Anmeldenummer: 19169272.2
(22) Anmeldetag: 15.04.2019
(51) Int. Cl.: C09K 21/00, E04B 1/94, A62C 2/06

(54) **VERFAHREN ZUM HERSTELLEN UND AUFBRINGEN EINES BRANDSCHUTZMATERIALS**

(71) Anmelder: Hilti Aktiengesellschaft, 9494 Schaan (LI)
(72) Erfinder: Kettler, Florian, 87656 Germaringen (DE)
(74) Vertreter: Hilti Aktiengesellschaft Corporate Intellectual Property

(57) **Zusammenfassung**

Verfahren zum Herstellen und Aufbringen eines Brandschutzmaterials (9), das eine Brandschutzmasse und Fasern beinhaltet, auf wenigstens ein Konstruktionsbauteil (10), mit den folgenden Schritten:
a) Bereitstellen eines Sprühgerätes (1) mit einem Sprühkopf (3), der ein Schneidwerk (4) umfasst,
b) Zuführen der Brandschutzmasse zum Sprühkopf (3), um einen Brandschutzmassestrahl (8) zu erzeugen,
c) Zuführen von Rovings (6) zum Schneidwerk (4), um die Rovings (6) zu den Fasern zu zerkleinern und einen Faserstrahl (7) zu erzeugen, und
d) Aufbringen des Brandschutzmaterials (9) auf das wenigstens eine Konstruktionsbauteil (10) mittels des Sprühkopfs (3),
wobei das Brandschutzmaterial (9) während des Aufbringens durch Vermischen des Brandschutzmassestrahls (8) und des Faserstrahls (7) nach dem Sprühkopf (3) gebildet wird.

## Beschreibung

Die Erfindung betrifft ein Verfahren zum Herstellen und Aufbringen eines Brandschutzmaterials, das eine Brandschutzmasse und Fasern beinhaltet, auf wenigstens ein Konstruktionsbauteil.

Brandschutzmaterialien, die aus einer Brandschutzmasse und Fasern bestehen, sind beispielsweise aus der WO 2006/067488 A1 oder der WO 2016/094763 A1 bekannt. Solche Materialien können mittels eines Sprühverfahrens auf das zu beschichtende Konstruktionsbauteil aufgesprüht werden. Hierzu muss jedoch das Brandschutzmaterial aus der Brandschutzmasse und den Fasern langwierig angerührt und über einen sehr langen Zeitraum vermischt werden, damit eine gleichmäßige Vermischung von Brandschutzmasse und Fasern erreicht wird. Es kann nicht ausgeschlossen werden, dass die Fasern während des Mischprozesses geschädigt werden, was zu einer Absenkung der mechanischen Brandschutzeigenschaften führen kann.

Aufgrund der notwendigen Vermischung verringert sich auch die Lagerstabilität des Brandschutzmaterials, da sich Fasern nach und nach absetzen.

Eine vollautomatisierte Dosierung von Fasern ist in der Verfahrenstechnik nach wie vor eine technische Herausforderung. Eine manuelle Dosierung von Fasern ist kostenintensiv.

Außerdem ist die Länge der der Brandschutzmasse zugemischten Fasern durch das Sprühgerät, mit dem das Brandschutzmaterial aufgetragen wird, begrenzt, da Baustoffbeschichtungsmittel mit höheren Gehalten an Fasern oder mit längeren Fasern, beispielsweise länger als 1 mm bis 10 mm, nach den bisher bekannten Verfahren nicht verarbeitbar sind, d.h. nicht förderbar, beispielsweise nicht sprühbar sind, oder eine inhomogene Verteilung der Fasern in den Brandschutzmaterialien aufweisen (sogenannte "Nesterbildung"), was sich nachteilig auf die Eigenschaften der Brandschutzbeschichtungen aus solchen Brandschutzmaterialien auswirkt. Daher sind meist nur sehr kurze Fasern bis zu einer Länge von 1 mm problemlos verwendbar.

Es ist daher Aufgabe der Erfindung, ein Verfahren zum Herstellen und Aufbringen eines Brandschutzmaterials bereitzustellen, das die vorgenannten Nachteile nicht aufweist und bei dessen Anwendung eine Brandschutzmasse mit unterschiedlichen Faserlängen mit größeren Gehalten an Fasern sowie mit einheitlicheren Oberflächen zugänglich zu machen.

Die Aufgabe wird gelöst durch ein Verfahren zum Herstellen und Aufbringen eines Brandschutzmaterials, das eine Brandschutzmasse und Fasern beinhaltet, auf wenigstens ein Konstruktionsbauteil, mit den folgenden Schritten:
a) Bereitstellen eines Sprühgerätes mit einem Sprühkopf, der ein Schneidwerk umfasst,
b) Zuführen der Brandschutzmasse zum Sprühkopf, um einen Brandschutzmassestrahl zu erzeugen,
c) Zuführen von Rovings zum Schneidwerk, um die Rovings zu den Fasern zu zerkleinern und einen Faserstrahl zu erzeugen, und
d) Aufbringen des Brandschutzmaterials auf das wenigstens eine Konstruktionsbauteil mittels des Sprühkopfs,
wobei das Brandschutzmaterial während des Aufbringens durch Vermischen des Brandschutzmassestrahls und des Faserstrahls nach dem Sprühkopf gebildet wird.

Das Vermischen der Brandschutzmasse, und der aus den Rovings erhaltenen Fasern erfolgt nach dem Sprühkopf, indem der Brandschutzmassestrahl und der Faserstrahl so zusammengeführt werden, dass der Brandschutzmassestrahl und der Faserstrahl vereint werden, bevor sie auf das Konstruktionsbauteil treffen. So wird sichergestellt, dass die Fasern mit der Brandschutzmasse gemischt werden und das faserhaltige Brandschutzmaterial auf das Konstruktionsteil aufgebracht wird. Der Brandschutzmassestrahl und der Faserstrahl werden dementsprechend so ausgerichtet, dass diese vor dem Auftreffen auf das Konstruktionsbauteil aufeinandertreffen und sich zu einem Strahl vereinen.

Dadurch, dass die Brandschutzmasse mit den Fasern erst beim Aufsprühen bzw. Aufbringen des Brandschutzmaterials vermischt werden, sind lange Vorbereitungszeiten bzw. Mischdauern zur Herstellung des Brandschutzmaterials nicht mehr notwendig. Durch die getrennte Lagerung von Fasern bzw. deren Vorläufer, die Rovings, und Brandschutzmasse können zudem die Standzeiten der einzelnen Komponenten bei der Lagerung und der Anwendung verlängert werden. Ferner wird die Lagerfähigkeit der Brandschutzmasse erhöht, da ein Absetzen von Fasern in der Brandschutzmasse nicht erfolgen kann.

Erfindungsgemäß wird beim Aufbringen des Brandschutzmaterials zunächst die Brandschutzmasse mittels eines Sprühkopfes des Sprühgerätes zerstäubt. Anschließend werden die Fasern - außerhalb des Sprühgeräts und nach dem Sprühkopf - zur zerstäubten Brandschutzmasse hinzugefügt. Hierdurch wird das Brandschutzmaterial erzeugt.

Dadurch ist die Länge der Fasern nicht mehr durch das Sprühgerät und den Sprühkopf limitiert. Mit anderen Worten wird die Brandschutzmasse gesprüht und die Fasern werden zu dem Strahl aus der zerstäubten Brandschutzmasse hinzugefügt.

Erfindungsgemäß ist hierfür an dem Sprühkopf ein Schneidwerk angebracht, das aus zugeführten Rovings die Fasern erzeugt und als Faserstrahl ausgibt. Als Rovings werden Fasern bezeichnet, die als ein Bündel, Strang oder Multifilamentgarn aus parallel angeordneten (unverdrehten), gestreckten Filamenten (Endlosfasern) bereitgestellt werden. Die Rovings werden durch das Schneidwerk zu Fasern der gewünschten Länge geschnitten oder gebrochen. Dabei kann die Faserlänge über das Schneidwerk entsprechend an die Anforderungen an das Brandschutzmaterial angepasst werden.

Insbesondere werden die Rovings und die Brandschutzmasse dem Sprühgerät getrennt zugeführt.

Hierdurch wird der Umgang mit den Fasern stark vereinfacht und es ist ein längeres Arbeiten ohne Unterbrechung möglich, wie dies etwa bei einem vorgemischten faserhaltigen Brandschutzmaterial der Fall wäre, um ein Absetzen der Fasern zu verhindern. Dies verkürzt die benötigte Zeit für die Applikation und weist somit Kostenvorteile für den Anwender auf.

In einer Ausführungsvariante der Erfindung bildet das Brandschutzmaterial auf dem wenigstens einen Konstruktionsbauteil eine Brandschutzbeschichtung, sodass das Konstruktionsbauteil großflächig insbesondere vollständig geschützt ist. Das Brandschutzmaterial kann entweder beim Hersteller des Konstruktionsbauteils oder vor Ort auf der Baustelle etwa nach der Installation des Konstruktionsbauteils aufgebracht werden.

Als Fasern eignen sich natürliche oder synthetische Fasermaterialien auf Basis von anorganischen Materialien. Anorganische Fasern sind beispielsweise Mineralfasern, Keramikfasern, Glasfasern, Silikafasern wie Natriumsilikatfasern, Mineralwollfasern, wie Aluminiumoxidfasern, Metallfasern, Carbonfasern oder Basaltfasern, worunter Glasfasern bevorzugt sind. Es können auch beschichtete Fasern Anwendung finden, beispielsweise mit Vernetzer oder Beschleuniger beschichtete Fasern. Diese Fasern werden jedoch erst durch Schneidwerk am Sprühkopf aus den entsprechenden Rovings erhalten.

In einer Ausführungsform der Erfindung werden sortenreine Rovings, die aus einer Faserstoffart bestehen, verwendet. In einer alternativen Ausführungsform werden Hybridrovings, die aus Filamenten unterschiedlicher Materialien bestehen, verwendet.

Die geschnittenen oder gebrochenen Fasern, also die Fasern des Faserstrahls, können beliebige Längen aufweisen, wie beispielsweise Längen von 0,1 µm bis unendlicher Länge, vorzugsweise 0,1 µm bis 200 mm, besonders bevorzugt 1 mm bis 200 mm und noch stärker bevorzugt 1 mm bis 50 mm und am meisten bevorzugt 10 mm bis 50 mm. Unendliche Länge bedeutet eine beliebige Länge, die grösser als 0,1 µm ist. Es können auch Kombinationen von Fasern unterschiedlicher Länge eingesetzt werden.

In einer bevorzugten Ausgestaltung der Erfindung enthält die Brandschutzmasse selbst keine Fasern.

Allerdings kann in einer weiteren Ausgestaltung der Erfindung die Brandschutzmasse vor dem Zuführen zu dem Sprühkopf bereit Fasern enthalten, so dass durch das erfindungsgemäße Verfahren weitere Fasern, vorzugsweise in einer anderen Länge, in die Brandschutzmasse eingebracht werden können.

Dies ist insbesondere dann von Vorteil, wenn Fasern mit unterschiedlichen Längen in die Brandschutzmasse eingebracht werden sollen. So kann beispielsweise die Brandschutzmasse vor dem Zuführen zu dem Sprühkopf bereits Kurzfasern enthalten und später beim Sprühen können Langfasern zugeführt werden, so dass durch das erfindungsgemäße Verfahren Kurzfasern und Langfasern in einfacher Weise appliziert werden können.

Durch den Einsatz von Fasern unterschiedlicher Länge können faserverstärkte Brandschutzbeschichtungen mit einheitlicherer Oberfläche erhalten werden. In derartigen Beschichtungen ragen weniger Fasern aus der Oberfläche der Faser-verstärkten Brandschutzbeschichtungen heraus, bzw. die Fasern, die aus der Oberfläche der Faser-verstärkten Brandschutzbeschichtungen herausragen, ragen weniger weit heraus - jeweils im Vergleich zu Faser-verstärkten Brandschutzbeschichtungen, die mit einer entsprechenden Masse an Fasern mit einheitlicher Länge hergestellten wurden.

In einer weiteren Ausführungsform ist die Brandschutzmasse intumeszierend, d.h. sie bildet im Brandfall eine isolierende Ascheschicht.

In einer Ausführungsvariante ist die Brandschutzmasse ein Bindemittelsystem aus einem Härtungsmittel und einem Bindermittel, wodurch die Feuerschutzeigenschaften der Brandschutzmasse weiter verbessert werden können.

Die Brandschutzmasse wird zum Beispiel vor oder beim Zuführen der Brandschutzmasse in das Sprühgerät durch Vermischen des Härtungsmittels und des Bindemittels bereitgestellt. Denkbar ist auch eine Vermischung erst im Sprühgerät, wobei in diesem Falle die Brandschutzmasse als Härtungsmittel und Bindemittel zugeführt wird.

Beispielweise beinhaltet die Brandschutzmasse ein Bindemittel, ein Härtungsmittel für das Bindemittel und/oder ein Vernetzungsmittel, intumeszierend und/oder ablativ wirkende Additive und gegebenenfalls weitere übliche Additive und/oder Füllstoffe. Die Brandschutzmasse umfasst im Allgemeinen 5 bis 95 Gew.-% Bindemittel, 0,5 bis 90 Gew.-% Härtungsmittel und 35 bis 85 Gew.-% intumeszierend und/oder ablativ wirkende Additive.

Als Bindemittel können beispielhaft solche auf organischer Basis, etwa Epoxy-Basis, wie Epoxy-Amin- oder Epoxy-Thiol-Basis, und auf Basis alkoxysilanfunktioneller Polymere genannt werden. Beispielhafte Brandschutzmassen beinhalten somit:
15 bis 95 Gew.-% wenigstens eines Epoxidharzes
0,5 bis 90 Gew.-% wenigstens einer Amin- oder Thiolverbindung
35 bis 85 Gew.-% intumeszierend und/oder ablativ wirkende Additive und
   oder
5 bis 60 Gew.-% alkoxysilanfunktioneller Polymere
bis 10 Gew.-% wenigstens eines Härtungs- und/oder Vernetzungsmittels, wie Wasser,
bis 40 Gew.-% wenigstens eines Weichmachers
35 bis 85 Gew.-% intumeszierend und/oder ablativ wirkende Additive.

Dadurch kann eine leicht zu verarbeitende Brandschutzmasse mit den nötigen Brandschutzeigenschaften bereitgestellt werden.

In einer Ausführungsform der Erfindung ist das wenigstens eine Konstruktionsbauteil ein Träger, wie ein Stahlträger, eine Wand, ein Kabel, ein Kabelkanal und/oder eine Kabeltrasse, wodurch beliebige Bauteile mit dem Brandschutzmaterial versehen werden können. Beispielsweise ist das Konstruktionsbauteil ein Stahlträger mit einer Kabeltrasse.

Insbesondere kann dieses Verfahren eingesetzt werden, um bereits bekannte Verfahren im industriellen Bereich zu ersetzen. Hier ist der große Vorteil der Erfindung, die Zeitersparnis. Üblich ist hier das händische schichtweise Verlegen von Glasfasermatten und dem händischen Auftrag von Matrixmaterial (Brandschutzmasse) und anschließender Bearbeitung mit Walzen/Rollen für die Verdichtung, wie beispielsweise in der WO 2006/067488 A1 beschrieben.

Weitere Merkmale und Vorteile der Erfindung ergeben sich aus der nachfolgenden Beschreibung.

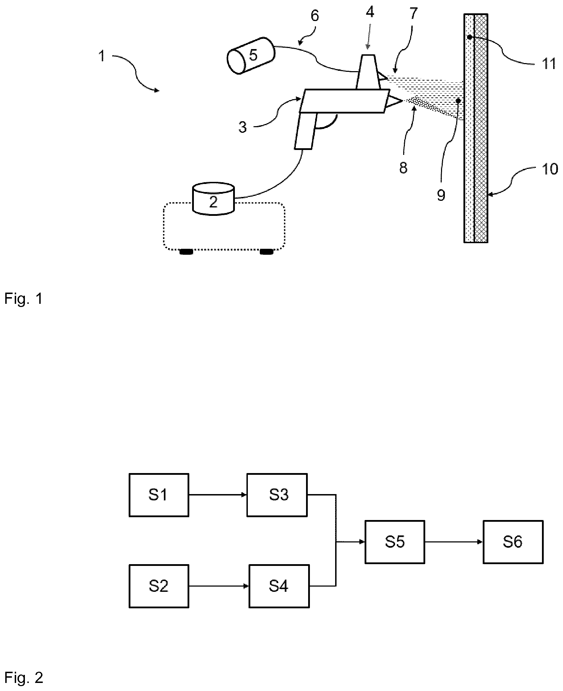

In Figur 1 ist ein Sprühgerät 1 und ein Konstruktionsbauteil 10 mit einer Brandschutzbeschichtung 11 dargestellt.

Das Konstruktionsbauteil 10 ist zum Beispiel ein Träger, wie ein Stahlträger, eine Wand, ein Kabel, ein Kabelkanal und/oder eine Kabeltrasse. Das Konstruktionsbauteil kann selbstverständlich auch ein Stahlträger mit einer Kabeltrasse sein.

Das Sprühgerät 1 weist einen Behälter 2 mit einer Brandschutzmasse, einen Sprühkopf 3, wie etwa eine Sprühpistole, und ein Schneidwerk 4 auf.

Im gezeigten Ausführungsbeispiel sind der Sprühkopf 3 mit dem Schneidwerk 4 als eine Einheit ausgeführt.

Um das Konstruktionsbauteil 10 mit der dargestellten Brandschutzbeschichtung 11 zu versehen, wird mittels des Sprühgeräts 1 ein Brandschutzmaterial 9 hergestellt und auf das Konstruktionsbauteil 10 aufgetragen. Das Brandschutzmaterial trocknet dann und bildet die Brandschutzbeschichtung 11.

In Figur 2 ist ein Ablaufplan des Verfahrens zum Herstellen und Aufbringen des Brandschutzmaterials 9 dargestellt.

Zum Auftragen und Herstellen des Brandschutzmaterials 9 wird zunächst das Sprühgerät 1 selbst sowie eine intumeszierende Brandschutzmasse M und auf eine Spule 5 aufgewickelte Rovings 6 bereitgestellt.

Die Brandschutzmasse ist flüssig und dazu geeignet, vom Sprühkopf 3 zerstäubt zu werden. Insbesondere ist sie intumeszierend.

Denkbar ist auch, dass die Brandschutzmasse ein Härtungsmittel und ein Bindemittel umfasst, die ein Bindemittelsystem bilden.

In der Brandschutzmasse sind weniger als 10 Gew.-% Fasern enthalten und die Brandschutzmasse ist im gezeigten Ausführungsbeispiel faserlos, das heißt, dass die Brandschutzmasse keine Fasern aufweist.

Die Brandschutzmasse wird dem Sprühgerät 1 in Schritt S1 (Fig. 2) zugeführt.

Wenn die Brandschutzmasse ein Bindemittelsystem aus Härtungsmittel und Bindemittel ist, wird zum Beispiel vor oder beim Zuführen der Brandschutzmasse in das Sprühgerät 1 das Härtungsmittel mit dem Bindemittel vermischt.

Denkbar ist auch eine Vermischung von Härtungsmittel und Bindemittel erst im Sprühgerät 1, wobei in diesem Falle das Härtungsmittel und das Bindemittel dem Sprühgerät 1 getrennt zugeführt werden.

In Schritt S2 (Fig. 2) werden die Rovings 6 dem Schneidwerk 4 zugeführt. Dies geschieht gleichzeitig mit Schritt S1.

Im gezeigten Ausführungsbeispiel werden Fasern durch Schneiden oder Brechen mittels des Schneidwerks 4 aus den Rovings 6 erzeugt. Die Rovings 6 sind beispielsweise Glasfaserrovings die auf eine Spule 5 aufgewickelt bereitsgestellt werden.

Dazu werden die Rovings 6 dem Schneidwerk 4 zugeführt. Das Schneidwerk 4 zerkleinert dann die Rovings 6 zu Fasern bzw. löst einzelne Fasern aus den Rovings 6 heraus. Die auf diese Weise gewonnenen Fasern werden als Faserstrahl 7 ausgegeben (Schritt S3, Fig. 2).

Die Länge der Fasern kann durch Einstellung des Schneidwerks 4 bestimmt werden. Beispielsweise haben die Fasern eine Länge zwischen 10 und 50 mm.

Die Brandschutzmasse wird durch einen Zerstäuber des Sprühkopfes 3 zerstäubt, sodass sich ein Strahl 8 aus zerstäubter Brandschutzmasse bildet (Schritt S4, Fig. 2).

Zum Herstellen des Brandschutzmaterials 9 (Schritt S6, Fig. 2) werden, wie in Figur 1 zu sehen, der Faserstrahl 7 und der Brandschutzmassestrahl 8 so ausgerichtet, dass sich diese vor dem Auftreffen auf das Konstruktionsbauteil 10 vereinen (Schritt 5, Fig. 2).

Eine Vermischung des Faserstrahls 7 und des Brandschutzmassestrahls 8 in Schritt S5 (Fig. 2), wodurch das Brandschutzmaterial 9 erhalten wird, erfolgt somit erst nach dem Sprühkopf während des Aufsprühens der Brandschutzmasse 8, die als faserhaltiges Brandschutzmaterial 9 auf das Konstruktionsbauteil 10 triff und dort nach dem Aushärten die Brandschutzbeschichtung 11 bildet.

Durch das Verfahren kann also eine Brandschutzbeschichtung 11 aus einem Brandschutzmaterial 9, das Fasern enthält, auf einem Konstruktionsbauteil 10 aufgebracht werden. Dabei ist die Faserlänge nicht durch die Größe des Zerstäubers des Sprühgeräts 1 vorgegeben.

Auch ist es nicht notwendig, vor dem Aufbringen das Brandschutzmaterial 9 zeitaufwendig anzurühren, wodurch ein großer Zeitvorteil erreicht wird. Auch besteht nicht die Gefahr, dass zu viel angerührtes Brandschutzmaterial entsorgt werden muss.

## Patentansprüche

1. Verfahren zum Herstellen und Aufbringen eines Brandschutzmaterials (9), das eine Brandschutzmasse und Fasern beinhaltet, auf wenigstens ein Konstruktionsbauteil (10), mit den folgenden Schritten:
a) Bereitstellen eines Sprühgerätes (1) mit einem Sprühkopf (3), der ein Schneidwerk (4) umfasst,
b) Zuführen der Brandschutzmasse zum Sprühkopf (3), um einen Brandschutzmassestrahl (8) zu erzeugen,
c) Zuführen von Rovings (6) zum Schneidwerk (4), um die Rovings (6) zu den Fasern zu zerkleinern und einen Faserstrahl (7) zu erzeugen, und
d) Aufbringen des Brandschutzmaterials (9) auf das wenigstens eine Konstruktionsbauteil (10) mittels des Sprühkopfs (3),
wobei das Brandschutzmaterial (9) während des Aufbringens durch Vermischen des Brandschutzmassestrahls (8) und des Faserstrahls (7) nach dem Sprühkopf (3) gebildet wird.

2. Verfahren nach Anspruch 1, **dadurch gekennzeichnet, dass** beim Aufbringen des Brandschutzmaterials (9) zunächst die Brandschutzmasse mittels eines Sprühkopfes (3) des Sprühgerätes (1) zerstäubt wird und anschließend die Fasern zur zerstäubten Brandschutzmasse hinzugefügt werden.

3. Verfahren nach Anspruch 1 oder 2, **dadurch gekennzeichnet, dass** die Rovings (6) und die Brandschutzmasse dem Sprühgerät (1) getrennt zugeführt werden.

4. Verfahren nach einem der vorhergehenden Ansprüche, **dadurch gekennzeichnet, dass** das Brandschutzmaterial (9) auf dem wenigstens einen Konstruktionsbauteil (10) eine Brandschutzbeschichtung (11) bildet.

5. Verfahren nach einem der vorhergehenden Ansprüche, **dadurch gekennzeichnet, dass** die Fasern eine Länge von 10 mm bis 50 mm haben.

6. Verfahren nach einem der vorhergehenden Ansprüche, **dadurch gekennzeichnet, dass** die Brandschutzmasse weniger als 10 Gew.-% Fasern enthält, insbesondere faserlos ist.

7. Verfahren nach einem der vorhergehenden Ansprüche, **dadurch gekennzeichnet, dass** die Brandschutzmasse intumeszierend ist.

8. Verfahren nach einem der vorhergehenden Ansprüche, **dadurch gekennzeichnet, dass** die Brandschutzmasse ein Bindemittelsystem aus einem Härtungsmittel und einem Bindemittel ist.

9. Verfahren nach einem der vorhergehenden Ansprüche, **dadurch gekennzeichnet, dass** die Brandschutzmasse folgendes beinhaltet:
- 5 bis 95 Gew.-% eines Bindemittels,
- 0,5 bis 90 Gew.-% eines Härtungsmittels für das Bindemittel,
- 35 bis 85 Gew.-% intumeszierend und/oder ablativ wirkende Additive.

10. Verfahren nach einem der vorhergehenden Ansprüche, **dadurch gekennzeichnet, dass** das wenigstens eine Konstruktionsbauteil (10) ein Träger, wie ein Stahlträger, eine Wand, ein Kabel, ein Kabelkanal und/oder eine Kabeltrasse ist.
